# EUROPÄISCHE PATENTSCHRIFT

(11) **EP 2 261 030 B1**
(45) Veröffentlichungstag und Bekanntmachung des Hinweises auf die Patenterteilung: **29.02.2012**
(21) Anmeldenummer: 10163399.8
(22) Anmeldetag: 20.05.2010
(51) Int. Cl.: B32B 17/10, C03C 27/12

(54) **Verfahren zur Herstellung einer Verbundglasscheibe**
Method for manufacturing a laminated glazing
Procédé de fabrication d'un vitrage feuilleté

(30) Priorität: 29.05.2009 DE 102009025886
(43) Veröffentlichungstag der Anmeldung: 15.12.2010
(73) Patentinhaber: Saint-Gobain Glass France, 92400 Courbevoie (FR)
(72) Erfinder: Van der Meulen, Uwe, 52385, Nideggen (DE); Klein, Marcel, 52499, Baesweiler (DE); Rodriguez Gonzalez, Luz, 52062, Aachen (DE)
(74) Vertreter: Lendvai, Tomas

(56) Entgegenhaltungen:
- WO-A2-2007/027861
- DE-A1- 3 904 191
- US-A- 4 465 736
- US-A- 5 024 895
- US-A- 5 145 744
- US-A1- 2007 029 026
- US-B1- 6 797 396

## Beschreibung

Die Erfindung betrifft eine Verbundglasscheibe, ein Verfahren zu deren Herstellung und deren Verwendung.

Im Rahmen der Bestrebungen zur Reduzierung des Kraftstoffverbrauches und damit auch der CO₂-Emission von Fahrzeugen werden verstärkte Bemühungen unternommen, die Erwärmung des Fahrzeugs durch Sonnenlicht zu reduzieren. Die infraroten Anteile der Sonneneinstrahlung führen zur Erwärmung des Fahrgastinnenraumes. Die Erwärmung des Fahrzeugs bei längeren Standzeiten in der Sonne führt zu einem zunehmenden Energieverbrauch der Klimaanlage. Zudem verursacht die Klimaanlage auch im laufenden Betrieb einen erhöhten Kraftstoffverbrauch.

Eine Möglichkeit,die Erwärmung des Fahrzeug- aber auch die eines Gebäudeinnenraums zu erniedrigen, ist die Reduzierung der Infrarotdurchlässigkeit der Scheiben. Hierzu kommen vor allem in Verbundgläsern Polyesterfolien zum Einsatz. Diese können entweder alleine oder mit einer zusätzlichen infrarotreflektierenden Beschichtung verwendet werden. Beispielsweise können Metalle wie Silber auf der Polyesterfolie aufgedampft sein. In Abhängigkeit von der verwendeten Beschichtung können selektiv Teile des elektromagnetischen Spektrums reflektiert werden, beispielsweise UV-Strahlung oder IR-Strahlung.

Der Herstellung einer Verbundglasscheibe mit einer zusätzlichen Zwischenschicht aus Polyester ist jedoch in der Regel schwierig. Aufgrund der unterschiedlichen Materialeigenschaften der Laminierfolie, beispielsweise PVB und der Polyesterfolie kommt es im Laminierprozess oft zur Faltenbildung. Diese Faltenbildung kann insbesondere bei kleineren Änderungen im Produktionsprozess oder bei geringfügigen Materialschwankungen der PVB-Folie oder Polyesterfolie auftreten. Derartige Scheiben können in der Regel nicht verwendet werden. Hohe Ausschusszahlen erhöhen zudem die Produktionskosten der einzelnen Scheibe und verschlechtern die Energie- und CO₂-Bilanz.

DE 198 58 227 C1 offenbart ein wärmereflektierendes Schichtsystem für transparente Substrate. Das wärmereflektierende Schichtsystem wird auf eine PET-Folie aufgetragen und zwischen zwei PVB-Folien sowie zwei Scheiben laminiert.

DE 197 05 586 C1 offenbart ein schalldämpfendes Verbundglas. Zwischen zwei Scheiben und zwei Schichten PVB ist ein Acrylatpolymer laminiert. Um zu vermeiden, dass Weichmacher vom PVB ins Acrylatpolymer übergehen, ist das Acrylatpolymer durch eine dünne PET-Schicht vom PVB getrennt. Diese PET-Schicht kann zusätzlich noch eine infrarotreflektierende Beschichtung aufweisen.

US 2005/0170160 A1 offenbart eine Verbundglasscheibe mit einer zwischen mindestens 2 PVB-Folien eingebetteten PET-Folie. Mindestens eine PVB-Folie ist versteift und weist eine Glasübergangstemperatur von mehr 35 °C auf. Die PET-Folie kann mit einer funktionalen Beschichtung zur Reduzierung von IR-Strahlen oder einer Beschichtung zur Geräuschreduzierung ausgestattet sein.

EP 0 371 949 A1 offenbart eine Verbundglasscheibe mit Sonnenschutzfilm. Der Sonnenschutzfilm enthält eine PET-Folie mit einer Beschichtung aus Metall und einem dielektrischen Matrerial. Die PET-Folie ist zwischen zwei PVB-Folien in zwei Glasscheiben laminiert. Die Beschichtung der PET-Folie verringert zudem die Totalreflexion der Scheibe, so dass in der Folie vorhandene Falten weniger sichtbar sind.

Die Aufgabe der Erfindung liegt darin, ein Verfahren zur Herstellung von Verbundglasscheiben bereitzustellen, das eine nicht nur optisch faltenfreie Laminierung der Zwischenschicht aus PVB-Folien und Polyesterfolie ermöglicht.

Die Aufgabe der vorliegenden Erfindung wird erfindungsgemäß durch ein Verfahren zur Herstellung einer Verbundglasscheibe nach demunabhängigen Anspruch 1 gelöst. Bevorzugte Ausführungen der Erfindung gehen aus den Unteransprüchen hervor.

Das Verfahren zur Herstellung einer Verbundglasscheibe umfasst in einem ersten Schritt die Herstellung einer Vorverbundscheibe. Die Herstellung der Vorverbundscheibe erfolgt durch Anordnen und gegebenenfalls Fixieren einer Laminierfolie, Polyesterfolie, Trennfolie und Deckscheibe auf einer Grundscheibe. Die Trennfolie enthält Polyvinylfluoride (PVF), Polyvinylidenfluoride (PVDF) und/oder Copolymere und/oder Gemische davon und ermöglicht das erfindungsgemäße faltenfreie Laminieren der Polyesterfolie auf der Laminierfolie. Die Laminierfolie, Polyesterfolie und Trennfolie können sowohl getrennt nacheinander auf der Grundscheibe aufgebracht werden, als auch als vorgefertigtes Laminat von zwei oder allen Folien. Auf der Trennfolie wird anschließend eine Deckscheibe angebracht und die Anordnung in der Reihenfolge aus Grundscheibe, Laminierfolie, Polyesterfolie, Trennfolie und Deckscheibe im Autoklaven behandelt. Die Anordnung kann bevorzugt noch vor der Behandlung im Autoklaven in einen Sack verpackt werden und vorevakuiert werden.

Nach der Behandlung im Autoklaven erfolgt die Abnahme der Deckscheibe der Vorverbundscheibe sowie das Abziehen und Entfernen der Trennfolie. Auf der nun freiliegenden, faltenfreien Polyesterfolie wird eine weitere Laminierfolie angebracht. Die Deckscheibe schließt anschließend die Anordnung in der Reihenfolge aus Grundscheibe, Laminierfolie, Polyesterfolie, Laminierfolie und Deckscheibe ab. Die Anordnung wird anschließend im Autoklaven wie eine konventionelle Verbundglasscheibenanordnung laminiert und verbunden.

Die Grundscheibe und/oder Deckscheibe enthalten bevorzugt Glas und/oder Polymere, bevorzugt Flachglas (Floatglas), Quarzglas, Borosilikatglas, Kalk-Natron-Glas und/oder Polymethylmethacrylat.

Die Laminierfolie enthält bevorzugt PVB (Polyvinylbutyral) und/oder EVA (Poly-Ethylvinylacetat).

Die Laminierfolie weist vor der Laminierung bevorzugt eine Dicke von 0,2 mm bis 0,8 mm auf.

Die Trennfolie enthält bevorzugt Polyvinylfluoride (PVF) und/oder Copolymere davon.

Die Trennfolie weist vor der Laminierung bevorzugt eine Dicke von 10 µm bis 150 µm, bevorzugt 40 µm bis 80 µm auf.

Die Polyesterfolie enthält bevorzugt Polybutylenterephthalat (PBT), Polycarbonat (PC), Polyethylenterephthalat (PET) und Polyethylennaphthalat (PEN) und/oder Gemische und/oder Copolymere davon.

Die Polyesterfolie enthält besonders bevorzugt Polyethylenterephthalat (PET).

Die Polyesterfolie weist bevorzugt eine Dicke von 10 µm bis 200 µm, bevorzugt 40 µm bis 80 µm auf.

Die Polyesterfolie enthält bevorzugt eine infrarotreflektierende Beschichtung, besonders bevorzugt ZnO, Ag, TiO₂, AlN und/oder Gemische davon.

Das Autoklavieren der Vorverbundscheibe erfolgt bevorzugt bei 90 °C bis 130 °C.

Das Autoklavieren der Vorverbundscheibe erfolgt bevorzugt bei 10 bar bis 15 bar.

Die Erfindung umfasst des Weiteren eine nach dem erfindungsgemäßen Verfahren hergestellte Verbundglasscheibe. Die Verbundglasscheibe umfasst mindestens eine Grundscheibe, Laminierfolie, Polyesterfolie, Laminierfolie und Deckscheibe.

Die Erfindung umfasst des Weiteren die Verwendung der Verbundglasscheibe als Fahrzeug-, Flugzeug-, Schiffs- oder Gebäudeverglasung.

Die Verbundglasscheibe wird als Fahrzeugwindschutzscheibe, bevorzugt als wärmeabweisende Fahrzeugwindschutzscheibe, besonders bevorzugt als Sicherheitsglas verwendet.

Im Folgenden wird die Erfindung anhand einer Zeichnung und eines Ausführungssowie Vergleichsbeispiels näher erläutert. Die Zeichnungen sind rein schematische Darstellungen und nicht maßstabsgetreu. Sie schränken die Erfindung in keiner Weise ein.

Ein Ausführungsbeispiel der Erfindung ist in der Zeichnung dargestellt und wird im Folgenden näher beschrieben.

Es zeigen:
Figur 1 einen Querschnitt der mit dem erfindungsgemäßen Verfahren hergestellten Vorverbundglasscheibe (A) und
Figur 2 einen Querschnitt der mit dem erfindungsgemäßen Verfahren hergestellten Verbundglasscheibe (B).

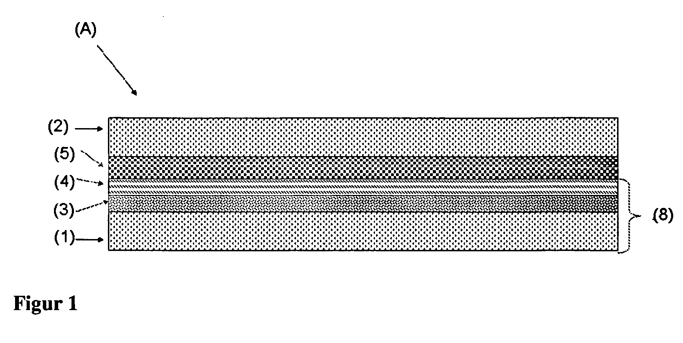

Figur 1 zeigt einen Querschnitt der mit dem erfindungsgemäßen Verfahren hergestellten Vorverbundglasscheibe (A). Die Vorverbundglasscheibe (A) weist dabei den folgenden Aufbau aus Grundscheibe (1), Laminierfolie (3), Polyesterfolie (4), Trennfolie (5) und Deckscheibe (2) auf.

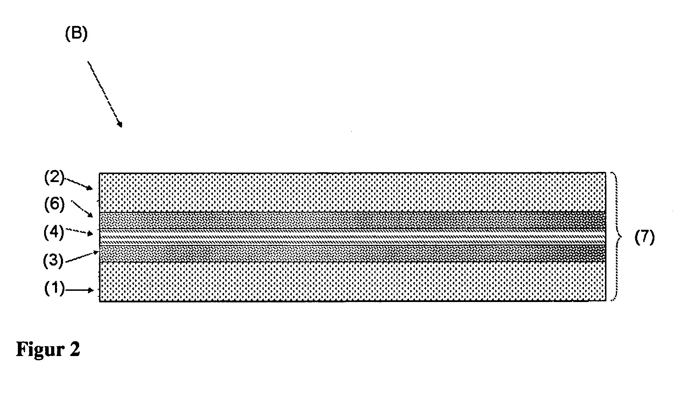

Figur 2 zeigt einen Querschnitt der mit dem erfindungsgemäßen Verfahren hergestellten Verbundglasscheibe (B). Die Verbundglasscheibe (B) weist dabei den folgenden Aufbau aus Grundscheibe (1), Laminierfolie (3), Polyesterfolie (4), Laminierfolie (6) und Deckscheibe (2) auf.

Die Bezugszeichen bedeuten dabei:
(1) Grundscheibe,
(2) Deckscheibe,
(3) Laminierfolie,
(4) Polyesterfolie,
(5) Trennfolie,
(6) Laminierfolie,
(A) Vorverbundscheibe,
(B) Verbundscheibe.

Im Folgenden wird die Erfindung anhand eines Beispiels des erfindungsgemäßen Verfahrens und eines Vergleichsbeispiels näher erläutert.

In zwei Versuchsreihen wurde die Faltenbildung als maximale Faltengröße einer nach dem erfindungsgemäßen Verfahren hergestellten Verbundglasscheibe mit Polyesterfolie (4) und einer Verbundglasscheibe mit Polyesterfolie (4) nach dem Stand der Technik verglichen. In beiden Versuchsreihen wurden dieselben Grundscheiben (1) aus Floatglas mit einer Dicke von 2,1 mm, Deckscheiben (2) aus Floatglas mit einer Dicke von 2,1 mm , Laminierfolien (3, 6) aus PVB (0,38 mm Dicke) und Polyester-Folien (4) aus PET (50 µm Dicke) verwendet. Die Trennfolie (5) im erfindungsgemäßen Verfahren besteht aus PVF mit einer Dicke von 50 µm vor dem Laminieren.

### a) Beispiel 1

### Herstellung der Vorverbundglasscheibe (A)

Ein Bilayer aus Laminierfolie (3) und Polyesterfolie (4) wurde auf die Grundscheibe (1) aufgelegt und mit Hilfe von Klammern fixiert. Anschließend wurde die Trennfolie (5) auf die Anordnung aus Grundscheibe (1), Laminierfolie (3) und Polyesterfolie (5) aufgelegt und mit Klammern fixiert. Anschließend wurde die Deckscheibe (2) auf die Trennfolie (5) aufgelegt und die gesamte Anordnung mit Haftband fixiert und in einem Kunststoffsack (COEX, BUERGOFOL GmbH, D-93354 Siegenburg) für 30 min bei Raumtemperatur evakuiert (1 mbar). Die vorevakuierte Anordnung wurde anschließend im Autoklaven für 2,5 h bei 80 °C bis 120 °C und 8 bar bis 13 bar behandelt.

### Herstellung der Verbundglasscheibe (B)

Anschließend wurden die Deckscheibe (2) und die Trennfolie (5) abgenommen. Auf der Polyesterfolie (4) wurden eine zweite Laminierfolie (6) und die Deckscheibe (2) angeordnet und fixiert. Die Anordnung wurde für 1 h bei 80 °C bis 110 °C und 1 mbar behandelt und anschließend im Autoklaven für 2,5 h bei 120 °C bis 150 °C und 10 bar bis 14 bar behandelt. Die Scheibe (B) wies keine Falten auf.

### b) Vergleichsbeispiel 2

Das Vergleichsbeispiel 2 unterschied sich vom erfindungsgemäßen Beispiel 1 durch den fehlenden Schritt der Herstellung und Fertigung einer Vorverbundscheibe (A). Ein Trilayer aus Laminierfolie (3), Polyesterfolie (4) und Laminierfolie (6) wurde auf die Grundscheibe (1) aufgelegt und mit Hilfe von Klammern fixiert. Anschließend wurde die Deckscheibe (2) aufgelegt und die gesamte Anordnung mit Haftband fixiert. Die Anordnung wurde für 1 h bei 80 °C bis 110 °C und 1 mbar behandelt und anschließend im Autoklaven für 2,5 h bei 120 °C bis 150 °C und 10 bar bis 14 bar behandelt. Die Scheibe (B) wies sichtbare Falten auf.

Die wesentlichen Verfahrensmerkmale des erfindungsgemäßen Beispiels 1 und des Vergleichsbeispiels 2 sind in Tabelle 1 zusammengefasst.

**Tabelle 1: Verfahrensschritte des erfindungsgemäßen Beispiels 1 und des Vergleichsbeispiels 2**

| Nr | Beispiel 1 | Vergleichsbeispiel 2 |
|---|---|---|
| 1 | Anordnung einer Laminierfolie (3), Polyesterfolie (4) und Trennfolie (5) auf einer Grundscheibe (1), | fehlt |
| 2 | Anordnung einer Deckscheibe (2) auf der Trennfolie (5), | fehlt |
| 3 | Autoklavieren einer Grundscheibe (1), Laminierfolie (3), Polyesterfolie (4), Trennfolie (5) und Deckscheibe (2) und Erhalten eine Vorverbundscheibe (A), | fehlt |
| 4 | Abnehmen der Deckscheibe (2) der Vorverbundscheibe (A), | fehlt |
| 5 | Entfernen der Trennfolie (5), | fehlt |
| 6 | Anordnen einer Laminierfolie (6) auf der Polyesterfolie (4), | Anordnung einer Laminierfolie (3), Polyesterfolie (4) und einer Laminierfolie (6) auf einer Grundscheibe (1) |
| 7 | Anordnen der Deckscheibe (2) auf der Laminierfolie (6) und | Anordnen der Deckscheibe (2) auf der Laminierfolie (6) und |
| 8 | Autoklavieren der Grundscheibe (1), Laminierfolie (3), Polyesterfolie (4), Laminierfolie (6) und Deckscheibe (2) | Autoklavieren der Grundscheibe (1), Laminierfolie (3), Polyesterfolie (4), Laminierfolie (6) und Deckscheibe (2) |

Die Längsausdehnung der sichtbaren Falten der Scheibenoberkante der Windschutzscheibe (B) im erfindungsgemäßen Beispiel 1 und im Vergleichsbeispiel sind in Tabelle 2 dargestellt.

**Tabelle 2: Längsausdehnung der sichtbaren Falten der Windschutzscheibe (B) im erfindungsgemäßen Beispiel 1 und im Vergleichsbeispiel 2**

| Beispiel | Maximale Faltenausdehnung |
|---|---|
| (erfindungsgemäß) 1 | - |
| (Vergleichsbeispiel) 2 | 5,3 cm |

Aus Tabelle 2 ist ersichtlich, dass im Vergleichsbeispiel 2 mit 5,3 cm deutlich sichtbare Falten vorliegen. Das erfindungsgemäße Beispiel 1 zeigt keine vorhandenen Falten. Dieses Ergebnis ist überraschend und unerwartet.

## Patentansprüche

1. Verfahren zur Herstellung einer Verbundglasscheibe wobei:
a. eine Laminierfolie (3), eine Polyesterfolie (4) und eine Trennfolie (5) auf einer Grundscheibe (1) angeordnet werden,
b. eine Deckscheibe (2) auf der Trennfolie (5) angeordnet wird,
c. die Grundscheibe (1), die Laminierfolie (3), die Polyesterfolie (4), die Trennfolie (5) und die Deckscheibe (2) autoklaviert werden und eine Vorverbundscheibe (A) erhalten wird,
d. die Deckscheibe (2) der Vorverbundscheibe (A) abgenommen wird,
e. die Trennfolie (5) entfernt wird,
f. eine Laminierfolie (6) auf der Polyesterfolie (4) angeordnet wird,
g. die Deckscheibe (2) auf der Laminierfolie (6) angeordnet wird und
h. die Grundscheibe (1), Laminierfolie (3), Polyesterfolie (4), Laminierfolie (6) und Deckscheibe (2) autoklaviert werden und eine Verbundglasscheibe (B) erhalten wird und
wobei die Trennfolie (5) Polyvinylfluoride (PVF), Polyvinylidenfluoride (PVDF) und/oder Copolymere, Derivate und/oder Gemische davon enthält.

2. Verfahren nach Anspruch 1, wobei die Grundscheibe (1) und/oder Deckscheibe (2) Glas und/oder Polymere, bevorzugt Flachglas (Floatglas), Quarzglas, Borosilikatglas, Kalk-Natron-Glas und/oder Polymethylmethacrylat enthält.

3. Verfahren nach Anspruch 1 oder 2, wobei die Laminierfolie (3, 6) PVB und/oder EVA enthält.

4. Verfahren nach einem der Ansprüche 1 bis 3, wobei die Laminierfolie (3, 6) eine Dicke von 0,2 mm bis 0,8 mm aufweist.

5. Verfahren nach einem der Ansprüche 1 bis 4, wobei die Trennfolie (5) eine Dicke von 10 µm bis 150 µm, bevorzugt 40 µm bis 80 µm aufweist.

6. Verfahren nach einem der Ansprüche 1 bis 5, wobei die Polyesterfolie (4) Polybutylenterephthalat (PBT), Polycarbonat (PC), Polyethylenterephthalat (PET) und Polyethylennaphthalat (PEN) und/oder Gemische und/oder Copolymere davon enthält.

7. Verfahren nach einem der Ansprüche 1 bis 6, wobei die Polyesterfolie (4) bevorzugt Polyethylenterephthalat (PET) enthält.

8. Verfahren nach einem der Ansprüche 1 bis 7, wobei die Polyesterfolie (4) eine Dicke von 10 µm bis 200 µm, bevorzugt 40 µm bis 80 µm aufweist.

9. Verfahren nach einem der Ansprüche 1 bis 8, wobei die Polyesterfolie (4) eine infrarotreflektierende Beschichtung enthält.

10. Verfahren nach einem der Ansprüche 1 bis 9, wobei die infrarotreflektierende Beschichtung ZnO, Ag, TiO₂, AlN und/oder Gemische davon enthält.

11. Verfahren nach einem der Ansprüche 1 bis 10, wobei das Autoklavieren der Vorverbundscheibe (A) bei 90 °C bis 130 °C erfolgt.

12. Verfahren nach einem der Ansprüche 1 bis 11, wobei das Autoklavieren der Vorverbundscheibe (A) bei 10 bar bis 15 bar erfolgt.

## Claims

1. Method for the production of a laminated glass pane, wherein:
a. a laminar film (3), a polyester film (4), and a separation film (5) are arranged on a base plate (1),
b. a cover plate (2) is arranged on the separation film (5),
c. the baseplate (1), the laminar film (3), the polyester film (4), the separation film (5), and the cover plate are autoclaved (2), and a pre-laminated plate (A) is obtained,
d. the cover plate (2) of the pre-laminated plate (A) is detached,
e. the separation film (5) is removed,
f. a laminar film (6) is arranged on the polyester film (4),
g. the cover plate (2) is arranged on the laminar film (6), and
h. the base plate (1), laminar film (3), polyester film (4), laminar film (6), and cover plate (2) are autoclaved, and a laminated glass pane (B) is obtained, and
wherein the separation film (5) contains polyvinyl fluoride (PVF), polyvinylidenfluoride (PVDF), and/or copolymers, derivatives, and/or mixtures thereof.

2. Method according to claim 1, wherein the base plate (1) and/or cover plate (2) contains glass and/or polymers, preferably flat glass (float glass), quartz glass, borosilicate glass, soda lime glass, and/or polymethyl methacrylate.

3. Method according to claim 1 or 2, wherein the laminar film (3, 6) contains PVB and/or EVA.

4. Method according to one of claims 1 through 3, wherein the laminar film (3, 6) has a thickness of 0.2 mm to 0.8 mm.

5. Method according to one of claims 1 through 4, wherein the separation film (5) has a thickness of 10 µm to 150 µm, preferably 40 µm to 80 µm.

6. Method according to one of claims 1 through 5, wherein the polyester film (4) contains polybutylene terephthalate (PBT), polycarbonate (PC), polyethylene terephthalate (PET), and polyethylene naphthalate (PEN) and/or mixtures and/or copolymers thereof.

7. Method according to one of claims 1 through 6, wherein the polyester film (4) contains preferably polyethylene terephthalate (PET).

8. Method according to one of claims 1 through 7, wherein the polyester film (4) has a thickness of 10 µm to 200 µm, preferably 40 µm to 80 µm.

9. Method according to one of claims 1 through 8, wherein the polyester film (4) contains an infrared reflecting coating.

10. Method according to one of claims 1 through 9, wherein the infrared reflecting coating contains ZnO, Ag, TiO₂, AlN, and/or mixtures thereof.

11. Method according to one of claims 1 through 10, wherein the autoclaving of the pre-laminated plate (A) is carried out at 90 °C to 130 °C.

12. Method according to one of claims 1 through 11, wherein the autoclaving of the pre-laminated plate (A) is carried out at 10 bar to 15 bar.

## Revendications

1. Procédé de fabrication d'une dalle de verre composite, dans lequel :
a. un film de laminage (3), un film de polyester (4) et un film de démoulage (5) sont appliqués sur une dalle de base (1) ;
b. une dalle de couverture (2) est appliquée sur le film de démoulage (5) ;
c. la dalle de base (1), le film de laminage (3), le film de polyester (4), le film de démoulage (5) et la dalle de couverture (2) sont passés à l'autoclave et une dalle composite préliminaire (A) est obtenue ;
d. la dalle de couverture (2) de la dalle composite préliminaire (A) est déposée ;
e. le film de démoulage (5) est retiré ;
f. un film de laminage (6) est appliqué sur le film de polyester (4) ;
g. la dalle de couverture (2) est appliquée sur le film de laminage (6) ; et
h. la dalle de base (1), le film de laminage (3), le film de polyester (4), le film de laminage (6) et la dalle de couverture (2) sont passés à l'autoclave et une dalle de verre composite (B) est obtenue ;
le film de démoulage (5) contenant des poly(fluorures de vinyle) (PVF), des poly(fluorures de vinylidène) (PVDF) et/ou des copolymères, des dérivés et/ou des mélanges de ceux-ci.

2. Procédé selon la revendication 1, dans lequel la dalle de base (1) et/ou la dalle de couverture (2) contiennent du verre et/ou des polymères, de préférence du verre plat (verre flotté), du verre de quartz, du verre de borosilicate, du verre sodo-calcique et/ou du poly(méthacrylate de méthyle).

3. Procédé selon l'une des revendications 1 ou 2, dans lequel le film de laminage (3, 6) contient du PVB et/ou de l'EVA.

4. Procédé selon l'une des revendications 1 à 3, dans lequel le film de laminage (3, 6) présente une épaisseur de 0,2 mm à 0,8 mm.

5. Procédé selon l'une des revendications 1 à 4, dans lequel le film de démoulage (5) présente une épaisseur de 10 µm à 150 µm, de préférence de 40 µm à 80 µm.

6. Procédé selon l'une des revendications 1 à 5, dans lequel le film de polyester (4) contient du poly (téréphtalate de butylène) (PBT), du polycarbonate (PC), du poly(téréphtalate d'éthylène) (PET) et du poly(naphtalate d'éthylène) (PEN) et/ou des mélanges et/ou des copolymères de ceux-ci.

7. Procédé selon l'une des revendications 1 à 6, dans lequel le film de polyester (4) contient de préférence du poly(téréphtalate d'éthylène) (PET).

8. Procédé selon l'une des revendications 1 à 7, dans lequel le film de polyester (4) présente une épaisseur de 10 µm à 200 µm, de préférence de 40 µm à 80 µm.

9. Procédé selon l'une des revendications 1 à 8, dans lequel le film de polyester (4) contient un revêtement réfléchissant les infrarouges.

10. Procédé selon l'une des revendications 1 à 9, dans lequel le revêtement réfléchissant les infrarouges contient du ZnO, de l'Ag, du TiO₂, de l'AlN et/ou des mélanges de ceux-ci.

11. Procédé selon l'une des revendications 1 à 10, dans lequel l'autoclavage de la dalle composite préliminaire (A) a lieu entre 90 °C et 130 °C.

12. Procédé selon l'une des revendications 1 à 11, dans lequel l'autoclavage se la dalle composite préliminaire (A) a lieu entre 10 bars et 15 bars.
